# NEUE EUROPÄISCHE PATENTSCHRIFT

(11) **EP 3 204 813 B2**
(45) Veröffentlichungstag und Bekanntmachung des Hinweises auf die Entscheidung über den Einspruch: **24.08.2022**
(45) Hinweis auf die Patenterteilung: 07.08.2019
(21) Anmeldenummer: 15771603.6
(22) Anmeldetag: 01.10.2015
(51) Int. Cl.: G02B 21/24, G02B 21/36

(54) **MIKROSKOP MIT SICH AUTOMATISCH ANPASSENDER IRISBLENDE**
MICROSCOPE WITH SELF-ADAPTING IRIS DIAPHRAGM
MICROSCOPE AVEC DIAPHRAGME À IRIS À ADAPTATION AUTOMATIQUE

(30) Priorität: 06.10.2014 DE 102014114471
(43) Veröffentlichungstag der Anmeldung: 16.08.2017
(73) Patentinhaber: Leica Microsystems (Schweiz) AG, 9435 Heerbrugg (CH)
(72) Erfinder: SCHNITZLER, Harald, 9450 Lüchingen (CH); SCHLAFFER, Georg, 93059 Regensburg (DE)
(74) Vertreter: Schaumburg und Partner Patentanwälte mbB
(86) Internationale Anmeldenummer: PCT/EP2015/072661
(87) Internationale Veröffentlichungsnummer: WO 2016/055338

(56) Entgegenhaltungen:
- DE-A1-102009 012 707
- DE-A1-102010 045 860
- JP-A- H0 921 957
- US-A1- 2005 168 809
- Anonymous: "Bedienungsanleitung System Control Panel Sycop 3", Carl Zeiss Microscopy GmbH, 1 May 2012 (2012-05-01), pages 1-92,

## Beschreibung

Die Erfindung betrifft ein Mikroskop, das ein Objektivsystem umfasst, das mindestens zwei wahlweise in den Strahlengang einbringbare Objektive mit unterschiedlichen Brennweiten aufweist. Ferner hat das Mikroskop ein Zoomsystem, das einen Zoombereich aufweist, wobei sich die jeweilige Gesamtvergrößerung eines zu mikroskopierenden Objektes jeweils aus der Brennweite des ausgewählten Objektivs und der innerhalb des Zoombereiches eingestellten Brennweite des Zoomsystems ergibt.
Ferner weist das Mikroskop eine Blende zur Begrenzung der Apertur des Strahlengangs auf, wobei durch das Verstellen der Blende die Größe der Öffnung der Blende und somit die Apertur einstellbar ist.

Bekannte Mikroskope weisen Objektivsysteme und/oder Zoomsysteme auf, mit deren Hilfe die Brennweite und somit die Gesamtvergrößerung des Bildes eines mikroskopierenden Objektes eingestellt werden kann. Je nach ausgewähltem Objektiv des Objektivsystems und je nach Einstellung des Zoomsystems ist eine andere ideale Einstellung der Apertur des Mikroskops notwendig, um optimale Bilder zu erzielen. Zur Einstellung der Apertur ist daher eine Irisblende vorgesehen, bei der die Größe der Öffnung verstellt werden kann, wodurch entsprechend die Apertur geändert wird.

Darüber hinaus können bei vielen bekannten Mikroskopen Hardwarekomponente, beispielsweise verwendete Kameras, gewechselt werden, wodurch sich wiederum unterschiedliche ideale Aperturen ergeben.

Darüber hinaus ist es bei vielen Mikroskopen möglich, dass die Benutzter unterschiedliche Präfenzen bezüglich verschiedener Parameter einstellen können, wobei sich in Abhängigkeit der verschiedenen Präferenzen wiederum unterschiedliche ideale Aperturen zur Aufnahme von hochwertigen Bildern ergeben.

Es sind Mikroskope bekannt, bei denen das Einstellen der Blende manuell über entsprechende Betätigungselemente erfolgt. Darüber hinaus sind Mikroskope bekannt, bei denen die Blende motorisch verstellt wird. Beiden Varianten ist es gemeinsam, dass der Benutzer des Mikroskops die Blenden entsprechend den jeweils gewählten Einstellungen des Mikroskops anpassen muss und dass ohne eine entsprechende Betätigung des Benutzers kein Verstellen der Blende erfolgt.

Nachteilig hieran ist, dass der Benutzer entsprechendes Fachwissen benötigt, um die ideale Einstellung der Blenden jeweils zu wählen. Darüber hinaus ist das Einstellen der Blende zeitaufwendig und kann schnell Fehlern unterliegen.

Darüber hinaus sind Mikroskope bekannt, bei denen eine Irisblende vorgesehen ist, die mechanisch mit dem Zoomsystem derart gekoppelt ist, dass die Blende in Abhängigkeit der eingestellten Zoomposition automatisch entsprechend mitverstellt wird.

Nachteil hieran ist es, dass eine solche mechanische Kopplung jeweils nur für einen Parameter möglich ist und z.B. für die Verwendung unterschiedlicher wahlweise in den Strahlengang einbringbarer Objektive nicht durchführbar ist. Darüber hinaus ermöglichen solche mechanische Kopplungen nicht den Eingriff des Benutzers des Mikroskops, beispielsweise um Einstellungen an persönliche Präferenzen anzupassen.

Dokument DE 10 2009 012 707 A1 offenbart ein Mikroskop mit einem Zoomobjektiv, einem pankratischen Zoomsystem, einem Zoomtubussystem, einer Aperturblende mit variabler Blendenöffnung und einer Ansteuereinheit. Durch die drei Zoomsysteme ist ein optisches System mit einem Abbildungsmaßstab gebildet, der sich aus dem Produkt der einzelnen Abbildungsmaßstäbe der drei Zoomsysteme ergibt. Die Ansteuereinheit ist zum Steuern von Funktionsparametern der vorgenannten optischen Elemente ausgebildet. Funktionsparameter sind dabei insbesondere der Abbildungsmaßstab der Zoomsysteme und die Apertur der Blende. Das Mikroskop umfasst ferner einen Wechsler für Objektive mit verschiedener fester Brennweite.

Dokument US 2005/168809 A1 offenbart ein Mikroskop mit einem Aperturblendensystem, das wenigstens eine Aperturblende mit variabler Blendenöffnung und eine Steuereinheit zum Steuern der wenigstens einen Aperturblende umfasst, einem Objektiv, einem Binokular und einem Zoomsystem.

Dokument DE 10 2010 045 860 A1 offenbart ein Zoomsystem für ein Mikroskop, das eine Blende mit variabler Blendenöffnung umfasst, deren objektseitige Apertur nichtlinear im Verhältnis zur Vergrößerung ansteigt.

Dokument JP H09 21957 A offenbart in den Figuren 1 und 2 ein Mikroskop mit einem Objektivrevolver 9 zum Einschwenken wenigstens zweier Objektive 8a, 8b in einen Beobachtungsstrahlengang des Mikroskops, einer Aperturblende und einer Apertursteuereinheit. Die Blendenöffnung der Aperturblende wird durch die Apertursteuereinheit in Abhängigkeit der Brennweite und der Vergrößerung des in den Beobachtungsstrahlengang des Mikroskops eingeschwenkten Objektivs gewählt.

Es ist Aufgabe der Erfindung, ein Mikroskop anzugeben, mit dessen Hilfe auf einfache Weise und bei geringem Bedienaufwand qualitativ hochwertige Bilder des zu mikroskopierenden Objektes erreicht werden.

Diese Aufgabe wird mit einem Mikroskop mit den Merkmalen des Anspruchs 1 gelöst. Vorteilhafte Weiterbildungen der Erfindung sind in den abhängigen Ansprüchen angegeben.

Erfindungsgemäß ist eine Steuereinheit zur Steuerung der Blende vorgesehen, mit deren Hilfe automatisch jeweils die optimale Einstellung der Blende ermittelt wird und die Blende entsprechend eingestellt wird. Hierzu ermittelt die Steuereinheit in Abhängigkeit der aktuellen Ausprägung mindestens eines Parameters des Mikroskops automatisch jeweils eine für die aktuelle Ausprägung ideale Einstellung der Blende und stellt die Blende entsprechend ein. Hierdurch wird erreicht, dass automatisiert jeweils die optimale Einstellung der Blende und somit der Apertur des Mikroskops eingestellt wird und die Bedienperson bei der Veränderung der Ausführung eines Parameters des Mikroskops nicht aufwendig selbst die ideale Einstellung der Blende ermitteln und einstellen muss. Somit werden der Bedienkomfort erhöht, die Einarbeitungszeit und das notwendige Expertenwissen des Benutzers reduziert und es werden Fehlbedienungen vermieden.

Die aktuelle Ausprägung ist anders ausgedrückt der aktuelle Wert oder die aktuelle Einstellung des Parameters. Der Parameter ist beispielsweise ein oder mehrere Parameter aus der folgenden Gruppe, die wenigstens umfasst: Einstellung des Zoomsystems, verwendetes Objektiv und/oder aktuelle Benutzereinstellung.

Insbesondere kann ein Motor zum Verstellen der Blende vorgesehen sein, wobei die Steuereinheit den Motor automatisch derart ansteuert, dass er die Blende entsprechend einstellt.

Darüber hinaus wird erreicht, dass die Größe der Öffnung der Blende durch die Motorisierung und die automatische Ansteuerung in Abhängigkeit von mindestens einem Parameter des Mikroskops sehr präzise und genau gesteuert werden kann. Somit kann bei jeder möglichen Einstellung des Mikroskops auf einfache Weise jeweils die ideale Apertur eingestellt werden.

Ferner wird hierdurch ein sogenanntes "Digital Fusion Optics" möglich, bei dem von einem Objekt kurz hintereinander Bilder mit unterschiedlicher Apertur und somit Auflösung aufgenommen und zu einem Bild überlagert werden. Hierzu erfolgt insbesondere eine Abrasterung zur Bestimmung der jeweils "besseren" Bereiche der Bilder, die dann zu einem Masterbild zusammengesetzt werden.

Bei der Blende handelt es sich insbesondere um eine Irisblende, bei der auf einfache Weise die Größe ihrer Öffnung variiert werden kann. Solche Irisblenden sind einfach und robust aufgebaut und erlauben auf einfache Weise ein genaues Einstellen der Apertur.

Alternativ kann anstelle einer Irisblende als Blende auch ein Aperturbegrenzer mit einer Vielzahl von elektronisch steuerbaren Segmenten vorgesehen sein. Hierbei kann insbesondere die Transmissivität oder die Reflektivität jedes Segments der elektronisch steuerbaren Segmente einzeln steuerbar sein.

Vorzugsweise ist der Aperturbegrenzer eine Flüssigkristallmatrix mit einem zweidimensionalen Raster von LCD-Segmenten. Der Aperturbegrenzer wird daher auch als "LC Shutter" bezeichnet.

Bei einer besonders bevorzugten Ausführungsform ermittelt die Steuereinheit in Abhängigkeit der aktuellen Ausprägung mindestens zweier Parameter des Mikroskops jeweils die vorbestimmte, ideale Einstellung der Blende und steuert den Motor derart an, dass er die Blende entsprechend einstellt.

Bei einer besonders bevorzugten Ausführungsform können auch mehr als zwei Parameter bei der Bestimmung der idealen Einstellung der Blende automatisch berücksichtigt werden. Insbesondere werden alle Parameter des Mikroskops berücksichtigt, die von der Bedienperson verstellt werden können, so dass diese abhängig davon, welche Einstellungen sie vornimmt, niemals selbst die Einstellung der Blende verändern muss um ein qualitativ hochwertiges Bild zu erhalten.

Die einzustellenden Einstellungen der Blende sind insbesondere zuvor experimentell und/oder rechnerisch ermittelt worden und derart gewählt, dass sich bei ihnen jeweils ein qualitativ hochwertiges Bild des zu mikroskopierenden Objektes ergibt, insbesondere, das an die jeweilige Einstellung optimal angepasste Bild.

Es ist besonders vorteilhaft, wenn in der Steuereinheit für alle möglichen Ausprägungen der berücksichtigten Parameter und auch bei allen möglichen Kombinationen der Ausprägungen der Parameter jeweils die einzustellende Einstellung der Blende den jeweiligen Ausprägungen eindeutig zugeordnet gespeichert sind. Die Steuereinheit liest dann bei der Ermittlung der einzustellenden Einstellung der Blende in Abhängigkeit der aktuellen Ausprägung des zu berücksichtigenden Parameters den entsprechenden Einstellwert der Blende aus und steuert den Motor entsprechend an. In der Steuereinheit ist insbesondere eine Tabelle gespeichert, in der für alle möglichen Ausprägungen und deren Kombination die entsprechend einzustellenden Werte der Blende gespeichert sind.

Bei einer alternativen Ausführungsform der Erfindung kann in der Steuereinheit auch eine Rechenvorschrift gespeichert werden, wobei die Steuereinheit mit Hilfe dieser Rechenvorschrift die jeweils einzustellende Einstellung der Blende ermittelt. In dieser Rechenvorschrift sind insbesondere die Parameter, deren Ausprägungen zu berücksichtigen sind, enthalten, so dass sich abhängig von der Ausprägung der jeweiligen Parameter die notwendige ideale Einstellung der Blende als Ergebnis der Rechenvorschrift ergibt.

Die Rechenvorschrift ist insbesondere mit Hilfe von Simulationen und Ausgleichsfunktionen zuvor ermittelt worden.

Die jeweils einzustellenden Einstellungen für die Blende sind insbesondere derart gewählt, dass sie die für die jeweilige Ausprägung der Parameter bzw. deren Kombination jeweils die optimale Einstellung der Blende sind, d.h. dass sich die für die gewählten Ausprägungen der Parameter optimale Apertur ergibt.

Die einzustellenden Einstellungen der Blende können hierbei direkt als notwendige Einstellungsparameter der Blende, notwendige Ansteuerungsdaten für den Motor, einzustellende Apertur und/oder einzustellende Größe der Öffnung der Blende gespeichert sein. Diese Werte lassen sich beliebig ineinander umrechnen, so dass es unerheblich ist, auf welche Weise sie gespeichert sind.

Bei einer besonders bevorzugten Ausführungsform der Erfindung ermittelt die Steuereinheit die einzustellende Einstellung der Blende in Abhängigkeit der aktuellen Einstellung des Zoomsystems und stellt die Blende automatisch entsprechend ein. In diesem Fall ist also der bei der Blendeneinstellung berücksichtigte Parameter die Zoomeinstellung und die aktuelle Ausprägung jeweils die aktuelle Einstellung des Zoomsystems.

Hierdurch wird erreicht, dass somit ein idealer Aperturverlauf über den gesamten Zoombereich erreicht werden kann, ohne dass hierfür die Bedienperson aufwendig die jeweilige notwendige Einstellung ermitteln muss. Insbesondere kann somit die Anpassung der Einstellung der Blende an die gewählte Einstellung des Zooms nicht vergessen werden.

Gegenüber von Systemen mit einer mechanischen Kopplung zwischen der Zoomeinstellung und der Blendeneinstellung wird der Vorteil erreicht, dass das System wesentlich einfacher aufgebaut ist. Darüber hinaus ermöglicht das automatische elektrische Einstellen der jeweiligen Blendeneinstellung, dass neben der Zoomeinstellung weitere Parameter berücksichtigt werden können.

Bei einer besonders bevorzugten Ausführungsform der Erfindung wird zusätzlich oder alternativ bei der Bestimmung der Einstellung der Blende auch das aktuell in den Strahlengang eingebrachte Objektiv berücksichtigt. Je nach verwendetem Objektiv ergibt sich eine andere ideale Apertur, so dass die Blende entsprechend verstellt werden muss, was durch die Berücksichtigung des ausgewählten Objektivs als Parameter bei der Ermittlung der Blendeneinstellung auf einfache Weise erreicht wird.

Darüber hinaus ist es vorteilhaft, wenn die Steuereinheit die einzustellende Einstellung der Blende in Abhängigkeit mindestens einer Eigenschaft mindestens einer Hardwarekomponente des Mikroskops ermittelt. Hierdurch wird erreicht, dass eine noch bessere Anpassung der Apertur des Mikroskops an die jeweils verwendete Einstellung erfolgt. Insbesondere können verschiedene Hardwarekomponenten des Mikroskops, beispielsweise der verwendete Bildsensor, gewechselt werden, wodurch sich aufgrund der unterschiedlichen Auflösungen und Empfindlichkeiten des Bildsensors andere ideale Aperturen ergeben.

Die Steuereinheit ermittelt die einzustellende Einstellung der Blende insbesondere in Abhängigkeit der Auflösung eines Bildsensors des Mikroskops, der Empfindlichkeit eines Bildsensors eines Mikroskops, der Auflösung einer Kamera des Mikroskops und der Empfindlichkeit einer Kamera des Mikroskops.

Ferner ist es vorteilhaft, wenn die Steuereinheit die einzustellende Einstellung der Blende in Abhängigkeit mindestens einer Benutzereinstellung eines Benutzers des Mikroskops ermittelt. Das Mikroskop ist insbesondere derart ausgebildet, dass der Benutzer Präferenzen und Einstellungen auswählen kann. Bei diesen Benutzereinstellungen kann er sich beispielsweise um die gewünschte Belichtungszeit, eine gewünschte von mehreren Auflösungsstufen, eine gewünschte von mehreren vorgegebenen Schärfentiefenstufen oder eine gewünschte von mehreren vorgegebenen Helligkeitsstufen handeln. Je nach ausgewählter Einstellung ergibt sich eine andere ideale Apertur. Insbesondere wird durch die automatische Anpassung erreicht, dass der Benutzer seine Präferenzen nicht aufwendig in die notwendigen Blendenstellungen umrechnen muss, sondern er die gewünschten Präferenzen über ein Menü im Klartext auswählen kann und das Mikroskop alle notwendigen Einstellungen automatisch durchführt.

Beispielsweise kann über einen an das Mikroskop angeschlossenen Computer ein Auswahlmenü vorgegeben sein, in dem der Benutzer beispielsweise als Präferenz "konstante Helligkeit", "erweiterte Auflösung", "bessere Auflösung", "höhere Schärfentiefe" etc. auswählen kann. Um diese Einstellung zu erreichen, muss die Blendeneinstellung entsprechend geändert werden, was automatisch durch die Steuereinheit erfolgt.

Bei einer besonders bevorzugten Ausführungsform der Erfindung werden mehrere oder alle der zuvor genannter Parameter, also insbesondere die Zoomeinstellung, das verwendete Objektiv, Eigenschaften von Hardwarekomponenten und/oder die Benutzereinstellungen ,bei der Ermittlung der Blendeneinstellung und der automatischen Umsetzung dieser Einstellung berücksichtigt. Dies wird dadurch ermöglicht, dass die Einstellung der Blende elektronisch gesteuert erfolgt. Bei einer mechanischen Einstellung der Blende kann immer nur auf einen Parameter abgezielt werden, wohingegen die automatische Einstellung über die Steuereinheit, also die Firmware des Mikroskops, die Berücksichtigung beliebig vieler Parameter in beliebigen Kombinationen erlaubt.

Es ist besonders vorteilhaft, wenn mindestens eine Sensoreinheit zur Ermittlung der aktuellen Ausprägung des Parameters bzw. der aktuellen Ausprägungen der Parameter vorgesehen ist. Dies ist insbesondere dann notwendig, wenn das Einstellen von einem der Parameter manuell erfolgen kann, damit die Steuereinheit weiß, welche Einstellung aktuell vorgenommen ist. Beispielsweise kann bei dem Mikroskop das Objektivsystem manuell und rein mechanisch verstellt werden, so dass zunächst keine elektronischen Informationen über die jeweilige Einstellung vorliegen. In diesem Fall sind dann insbesondere Sensoren vorgesehen, mit deren Hilfe die Einstellung eindeutig ermittelt werden können.

Bei der Verwendung elektrischer Zoomeinstellsystemen und Objektiveinstellsystem ist es dagegen nicht unbedingt notwendig, Sensoren vorzunehmen, da die jeweiligen bei der Zoom- bzw. Objektiveinstellung genutzten elektrischen Steuersignale für die Ermittlung der Blendeneinstellung verwendet werden können.

Jedem der Objektive ist ein Zoomteilbereich innerhalb des Zoombereiches zugeordnet, wobei Begrenzungsmittel vorgesehen sind, durch die die Verstellbarkeit des Zoomsystems jeweils auf den Zoombereich begrenzt ist, der dem ausgewählten Objektiv zugeordnet ist. Die Steuereinheit ermittelt die vorbestimmte Einstellung der Blende in diesem Fall in Abhängigkeit des jeweils gewählten Objektivs und/oder der eingestellten Brennweite des Zoomsystems.

Durch die Verwendung eines Zoomsystems, welches größer dimensioniert ist, als es eigentlich für den gewünschten Zoomfaktor notwendig wäre, wird erreicht, dass die Brennweitenunterschiede der verwendeten Objektive nicht so groß wie bei konventionellen Mikroskopen sein müssen. Insbesondere kann durch Zuordnung von Zoomteilbereichen erreicht werden, dass bei Objektiven mit einer großen Vergrößerung auch eine möglichst hohe Vergrößerung durch das Zoomsystem erfolgt, und dieses somit für eine hohe Gesamtvergrößerung zusammenwirkt. Bei Objektiven niedriger Vergrößerung dagegen wird der Zoomteilbereich derart innerhalb des Gesamt-Zoombereiches gewählt, dass auch er einer niedrigeren Vergrößerung entspricht, so dass große Feldwinkel erreicht werden. Somit wird durch den zugeordneten Zoomteilbereich erreicht, dass das Zoomsystem jeweils an die individuellen Anforderungen des jeweiligen Objektivs angepasst ist, so dass entsprechend an den Aufbau der Objektive geringere Anforderungen gestellt werden können und insbesondere Objektive mit näher beieinanderliegenden Brennweiten verwendet werden können. Hierdurch wird erreicht, dass die Objektive kompakter und somit kostengünstiger aufgebaut werden können. Insbesondere können somit Objektive mit ähnlicheren Abmessungen verwendet werden, was insbesondere ein parfokales Objektivsystem ermöglicht. Durch eine solche parfokale Ausführung des Objektivsystems wird wiederum erreicht, dass bei einem Objektivwechsel keine neue Fokussierung erfolgen muss. Darüber hinaus wird ermöglicht, dass ein vergleichsweise hoher Zoomfaktor erreicht wird. Dies bringt den Vorteil mit sich, dass insbesondere bei jedem Objektiv ein für die Bedienperson tatsächlich verbleibender Zoomfaktor gleich groß ausfällt.

Unter dem Gesamt-Zoombereich des Zoomsystems wird insbesondere der baulich bedingte maximal zur Verfügung stehende Zoombereich verstanden. Der Gesamt-Zoombereich gibt insbesondere die verschiedenen Brennweiten an, die über das Zoomsystem eingestellt werden können. Die Grenzen des Gesamt-Zoombereiches sind somit durch eine minimale Brennweite und eine maximale Brennweite des Zoomsystems gegeben.

Das Objektivsystem umfasst insbesondere einen Objektivrevolver, in dem die verschiedenen Objektive gelagert sind und durch dessen Drehung jeweils das gewünschte Objektiv in den Strahlengang eingebracht werden kann. Die Objektive selbst sind insbesondere derart ausgebildet, dass bei ihnen jeweils die Anordnung der einzelnen Linsengruppen zueinander fest vorgegeben und nicht verstellbar ist. Das Zoomsystem dagegen weist mehrere Linsengruppen auf, von denen mindestens eine relativ zu den unbeweglichen Linsengruppen axial verfahrbar ist, wodurch die Brennweite des Zoomsystems und somit seine Vergrößerung eingestellt werden kann.

Vorzugsweise ist auch dem zweiten Objektiv ein zweiter Zoomteilbereich innerhalb des Gesamt-Zoombereichs zugeordnet.

Der Zoomteilbereich mindestens eines Objektivs ist kleiner als der Gesamt-Zoombereich. Besonders vorteilhaft ist es, wenn die Zoomteilbereiche aller Objektive jeweils kleiner als der Gesamt-Zoombereich des Zoomsystems sind. Somit wird für jedes Objektiv nur jeweils der Teilbereich des Gesamt-Zoombereiches verwendet, der von seinen Eigenschaften her zu den Eigenschaften des Objektivs passt.

Da der Gesamt-Zoombereich des Zoomsystems somit größer ist als die Zoomteilbereiche, die für die einzelnen Objektive verwendet werden, wird das Zoomsystem auch als "überdimensioniertes" oder "oversized" Zoomsystem bezeichnet.

Die Zoomteilbereiche der Objektive können sich hierbei zumindest teilweise auch überschneiden. Alternativ ist auch möglich, dass die Zoomteilbereiche auch derart gewählt sind, dass keine Überschneidungen erfolgen. Durch das Überschneiden der Zoomteilbereiche wird erreicht, dass jedes Objektiv durch das entsprechende Einstellen der Brennweite des Zoomsystems einen möglichst großen Verstellbereich hat und die Vergrößerung entsprechend stark variiert werden kann.

Bei einer bevorzugten Ausführungsform der Erfindung sind die unteren und oberen Grenzen der Zoomteilbereiche jeweils derart gewählt, dass sich bei den verschiedenen Zoomteilbereichen zwischen der jeweiligen unteren und oberen Grenze jeweils der gleiche vorbestimmte Zoomfaktor ergibt. Unter dem Zoomfaktor wird insbesondere der Quotient aus der oberen und der unteren Grenze, also insbesondere der Quotient aus der maximalen Brennweite und der minimalen Brennweite, für den jeweiligen Zoomteilbereich verstanden. Somit wird erreicht, dass für jedes Objektiv der Bedienperson der gleiche Zoomfaktor zur Verfügung steht, so dass die Bedienperson unabhängig davon, welches Objektiv verwendet wird, die gleiche Vergrößerungsmöglichkeit hat, wobei sich jedoch je nach verwendetem Objektiv natürlich unterschiedliche Gesamtvergrößerungen ergeben, da sich dieser als Quotient der Brennweite des Zoomsystems durch die Brennweite des Objektivs ergeben.

Insbesondere ist es vorteilhaft, wenn die untere Grenze mindestens eines Zoomteilbereichs der unteren Grenze des Gesamt-Zoombereiches und die obere Grenze mindestens eines Zoomteilbereiches der oberen Grenze des Gesamt-Zoombereiches entspricht. Hierdurch wird erreicht, dass der Gesamt-Zoombereich des Zoomsystems optimal ausgenutzt wird und somit auch der sich insgesamt ergebende Zoomfaktor des Mikroskops möglichst groß ist.

Es ist besonders vorteilhaft, wenn die Zoomteilbereiche derart voreingestellt sind, dass der Zoomteilbereich eines Objektivs mit einer Brennweite, die größer ist als die Brennweite eines anderen Objektivs, Vergrößerungen bzw. Brennweiten umfasst, die kleiner sind als die kleinste Vergrößerung bzw. Brennweite des Zoomteilbereiches dieses anderen Objektivs. Wenn das eine Objektiv eine größere Brennweite als das andere Objektiv hat, bedeutet dies, dass dieses Objektiv eine geringere Vergrößerung als das andere Objektiv bewirkt. Der Zoomteilbereich ist somit derart gewählt, dass dieser bezogen auf den gesamten Zoombereich die kleineren Brennweiten des Zoomteilbereiches abdeckt, so dass sich die Eigenschaften des Objektivs und des Zoomsystems, insbesondere der gewünschte große Feldwinkel bei niedrigen Vergrößerungen, optimal ergänzen.

Umgekehrt sind die Zoomteilbereiche derart voreingestellt, dass der Zoomteilbereich eines Objektivs mit einer Brennweite, die kleiner ist als die Brennweite eines anderen Objektivs, Vergrößerungen bzw. Brennweiten umfasst, die größer sind als die größte Vergrößerung bzw. Brennweite des Zoomteilbereiches eines anderen Objektivs. Hierdurch wird erreicht, dass bei Objektiven mit einer hohen Vergrößerung auch der Zoomteilbereich die hohen Brennweiten des Gesamt-Zoombereiches abdeckt und somit zu einer großen Gesamtvergrößerung beiträgt.

Bei einer besonders bevorzugten Ausführungsform der Erfindung hat das Objektivsystem ein erstes Objektiv mit einer ersten Brennweite und ein zweites Objektiv mit einer zweiten Brennweite, wobei die zweite Brennweite größer als die erste Brennweite ist. Somit bewirkt das zweite Objektiv eine geringere Vergrößerung als das erste Objektiv. Der Gesamt-Zoombereich weist als untere Grenze eine dritte Brennweite und als obere Grenze eine vierte Brennweite auf. Der dem ersten Objektiv zugeordnete erste Zoomteilbereich hat als obere Grenze die vierte Brennweite und der dem zweiten Objektiv zugeordnete zweite Zoomteilbereich als untere Grenze die dritte Brennweite. Somit wird erreicht, dass das erste Objektiv, welches von den beiden Objektiven die höhere Vergrößerung hat, beim Einstellen der vierten Brennweite zusammen mit dem Zoomsystem eine maximal große Gesamtvergrößerung erreicht. Umgekehrt kann durch Auswählen des zweiten Objektivs und der dritten Brennweite eine möglichst geringe Vergrößerung erreicht werden.

Die Brennweiten können insbesondere auch derart gewählt sein, dass sich bei entsprechenden Einstellungen die Gesamtvergrößerungen von < 1 ergeben, d. h., dass die Objekte verkleinert abgebildet werden.

Es sind Begrenzungsmittel vorgesehen, durch die die Verstellbarkeit des Zoomsystems jeweils auf den Zoomteilbereich begrenzt ist, der dem ausgewählten Objektiv, also demjenigen Objektiv, das aktuell in den Strahlengang eingebracht ist, zugeordnet ist.

Gemäß der Erfindung ist als Begrenzungsmittel an jedem Objektiv mindestens ein Anschlag vorgesehen, wobei durch den Anschlag die Verstellbarkeit des Zoomsystems auf den diesem Objektiv jeweils zugeordneten Zoomteilbereich begrenzt wird. Somit wird rein mechanisch sichergestellt, dass bei jedem Objektiv nur ein Verstellen des Zoomsystems innerhalb des zugeordneten Zoomteilbereiches möglich ist.

Bei einer besonders bevorzugten Ausführungsform sind an jedem Objektiv zwei Anschläge vorgesehen, durch die das Verstellen des Zoomsystems begrenzt wird. Sofern eine Grenze des Zoomteilbereichs durch eine Grenze des baubedingt maximal möglichen Gesamt-Zoombereiches gegeben ist, kann auf dieser Seite auf einen Anschlag verzichtet werden.

Bei einer nicht beanspruchten Alternative kann das Verstellen des Zoomsystems auch elektrisch erfolgen, indem eine elektrische Antriebseinheit, insbesondere ein Motor, vorgesehen ist. Ferner ist eine Steuereinheit zum Ansteuern der Antriebseinheit vorgesehen, wobei in dieser Steuereinheit die den jeweiligen Objektiven zugeordnete Teilbereiche gespeichert sind. Die Steuereinheit steuert die Antriebseinheit dann derart an, dass jeweils nur ein Verstellen innerhalb des jeweiligen Zoomteilbereiches möglich ist. Insbesondere ist ein Sensorik vorgesehen, durch die die Steuereinheit automatisch erkennen kann, welches Objektiv in den Strahlengang eingebracht ist, so dass die Steuereinheit dann automatisch den von der Bedienperson einstellbaren Zoomteilbereich auswählt und die elektrische Antriebseinheit entsprechend ansteuert.

Ferner ist es vorteilhaft, wenn das Mikroskop ein Betätigungselement zum manuellen Einstellen des Vergrößerungsfaktors des Zoomsystems umfasst. Bei diesem Betätigungselement kann es sich um einen Drehknopf handeln.

Ferner ist es vorteilhaft, wen das Zoomsystem mindestens zwei Linsengruppen aufweist, von denen eine zur Einstellung der Brennweite des Zoomsystems in Richtung der optischen Achse bewegbar ist. Bei einer bevorzugten Ausführungsform weist das Zoomsystem drei oder vier Linsengruppen auf, von denen zwei in Richtung der optischen Achse bewegbar sind.

Bei dem Mikroskop handelt es sich insbesondere um ein digitales Mikroskop, das eine Bilderfassungseinheit zur Aufnahme von Bildern des mikroskopierenden Objektes umfasst. Bei dem digitalen Mikroskop wird das Bild des zu mikroskopierenden Objektes insbesondere über das Zoomsystem direkt auf die Bilderfassungseinheit abgebildet.

Bei einer alternativen Ausführungsform kann es sich auch um visuelle Mikroskope handeln.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische, perspektivische Darstellung eines digitalen Mikroskops;
- Figur 2: eine schematische Darstellung eines Vergrößerungssystems des Mikroskops nach Figur 1;
- Figur 3: eine schematische Darstellung eines Vergrößerungssystems nach Figur 2 bei der Verwendung eines ersten Objektivs;
- Figur 4: eine schematische Darstellung eines Vergrößerungssystems nach Figur 2 bei der Verwendung eines zweiten Objektivs;
- Figur 5: eine schematische Darstellung eines Zoombereiches und der Zoomteilbereiche des ersten und des zweiten Objektivs und
- Figur 6: eine schematische Darstellung eines Vergrößerungssystems gemäß einer weiteren Ausführungsform.

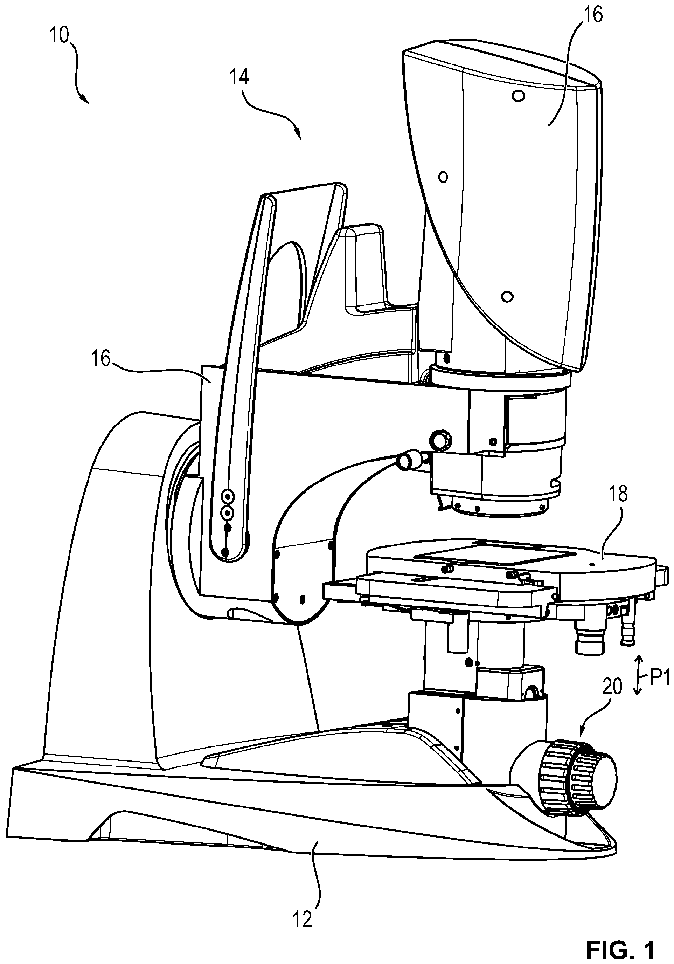

In Figur 1 ist eine schematische perspektivische Darstellung eines digitalen Mikroskops gezeigt. Das Mikroskop 10 umfasst einen stationären Stativgrundkörper 12, sowie eine relativ zu diesem verschwenkbare Schwenkeinheit 14.

Die Schwenkeinheit 14 umfasst mindestens eine Bilderfassungseinheit, mit deren Hilfe ein Bild der zu mikroskopierenden Objekte aufgenommen werden kann. Insbesondere können über diese Bilderfassungseinheit nicht nur einzelne Bilder, sondern auch Bildserien und Videos aufgenommen werden, die es ermöglichen, das zu mikroskopierende Objekt aus verschiedenen Blickwinkeln zu betrachten.

Ferner weist die Schwenkeinheit ein Objektiv und ein Zoomsystem auf, mit dessen Hilfe unterschiedliche Vergrößerungen der zu mikroskopierenden Objekte eingestellt werden können. Das Objektivsystem hat eine Vielzahl von Objektiven, von denen jeweils eines wahlweise in den Strahlengang eingebracht ist.

Die Bilderfassungseinheit, das Objektivsystem und das Zoomsystem sind in Figur 1 nicht sichtbar, da diese von dem Gehäuse 16 der Schwenkeinheit 14 verdeckt sind.

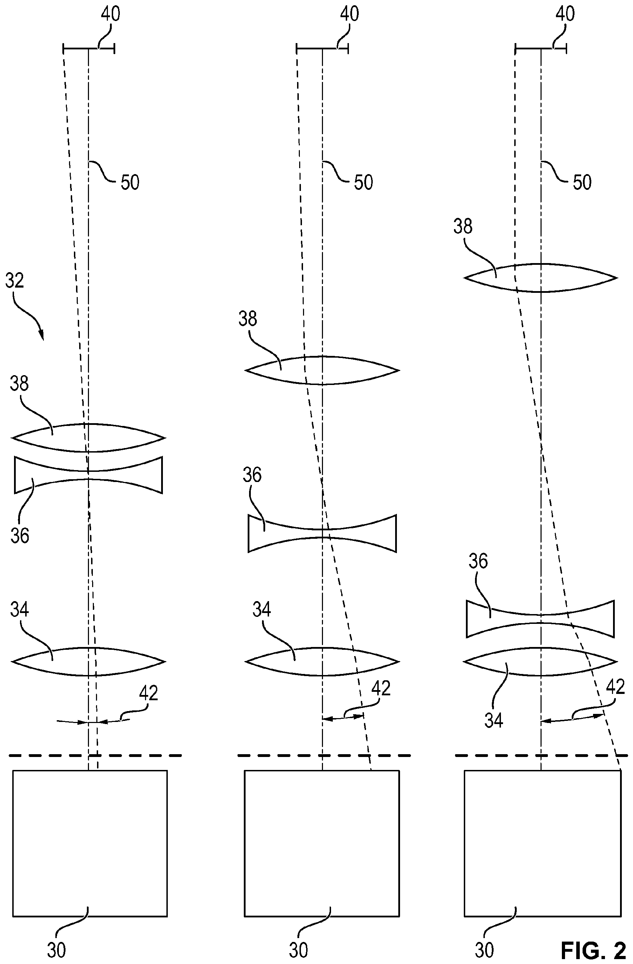

Der Aufbau des Objektivsystems und des Zoomsystems wird im Folgenden noch im Zusammengang mit den Figuren 2 bis 4 näher beschrieben.

Die Objektive des Objektivsystems sind insbesondere parfokal ausgebildet, so dass beim Objektivwechsel keine Refokussierung durch die Bedienperson erfolgen muss. Die Objektive sind hierbei insbesondere auf den Abstand zwischen der Drehachse, durch die Schwenkachse 14 gedreht werden kann und dem Interface der Objektive, abgestimmt, so dass sich ein euzentrisches System ergibt, was zur Folge hat, dass bei einem Verschwenken der Schwenkeinheit 14 keine neue Fokussierung erfolgen muss und zudem der betrachtete Bereich in der Bildmitte zentriert bleibt.

An dem Stativgrundkörper ist ferner ein Objekttisch 18 angeordnet, auf dem die zu mikroskopierenden Objekte aufgebracht sind. Dieser Objekttisch 18 kann mit Hilfe von Stellrädern 20 relativ zum Stativgrundkörper 12 in Richtung des Doppelpfeiles P1 verstellt werden, wodurch eine Fokussierung der zu mikroskopierenden Objekte möglich ist.

In Figur 2 ist rein schematisch das in der Schwenkeinheit 14 angeordnete Vergrößerungssystem in drei verschiedenen Einstellungen gezeigt. Das Vergrößerungssystem umfasst ein Objektivsystem 30 sowie ein Zoomsystem 32, über deren Zusammenspiel eine gewünschte Gesamtvergrößerung erreicht wird. Das Objektivsystem 30 umfasst mindestens zwei Objektive 44, 52 mit unterschiedlichen Brennweiten, von denen jeweils eines wahlweise in den Strahlengang des Mikroskops 10 eingeschwenkt ist.

Das Zoomsystem 32 weist drei Linsengruppen 34 bis 38 auf, von denen zwei Linsengruppen 36, 38 in Richtung der optischen Achse 50 verstellbar sind. Bei einer alternativen Ausführungsform der Erfindung kann das Zoomsystem auch nur zwei Linsengruppen 34 bis 38 umfassen, von denen lediglich eine Linsengruppe 34 bis 38 axial verstellbar ist. Ebenso sind auch Zoomsysteme mit mehr als drei Linsengruppen 34 bis 38 denkbar.

Bei der in Figur 2 gezeigten Ausführungsform wird das Bild des Objektes über das Zoomsystem 32 direkt auf einer Bilderfassungseinheit 40 abgebildet, bei der sich insbesondere um eine Kamera handeln kann.

In Figur 2 sind drei Einstellungen des Zoomsystems 32 gezeigt. Bei der linken Einstellung ist das Zoomsystem 32 so eingestellt, dass es eine maximale Brennweite hat und somit eine maximale Vergrößerung bewirkt. Entsprechend ist der Feldwinkel 42, welcher den Winkel des Hauptstrahls zur optischen Achse 50 im Bereich der Schnittstelle zum Objektivsystem 30 angibt, minimal ausgebildet.

Die in Figur 2 dargestellte rechte Einstellung dagegen zeigt die andere Extremeinstellung des Zoomsystems 32, nämlich diejenige Einstellung, bei der das Zoomsystem 32 eine minimale Brennweite hat und entsprechend eine minimale Vergrößerungswirkung aufweist. In diesem Fall ist der Feldwinkel 42 maximal ausgebildet.

Der in Figur 2 gezeigte mittlere Fall stellt eine Zwischenstellung dar, bei der eine Brennweite durch das Zoomsystem 32 erreicht wird, die größer ist als die minimale Brennweite und kleiner als die maximale Brennweite ist. Entsprechend liegt hierbei der Feldwinkel 42 zwischen den Feldwinkeln 42 der anderen beiden Fälle.

Die jeweilige Gesamtvergrößerung des Mikroskops 10 ergibt sich aus dem Quotienten der eingestellten Brennweite des Zoomsystems 32 und die Brennweite des in den Strahlengang eingebrachten Objektivs 44, 52 des Objektivsystems 30.

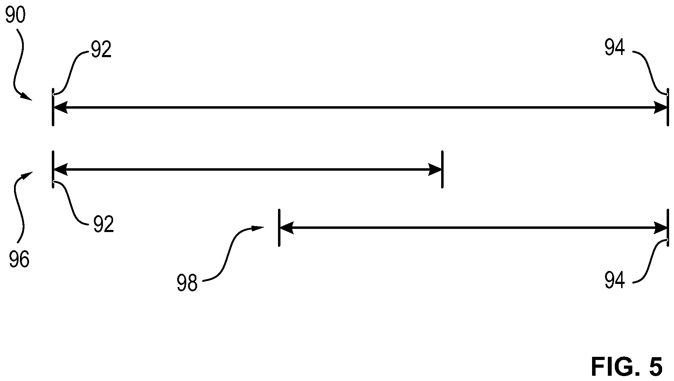

Das Zoomsystem 32 weist einen Gesamt-Zoombereich auf, der die über das Zoomsystem 32 einstellbaren Brennweiten des Zoomsystems 32 angibt. Dieser Gesamt-Zoombereich ist in Figur 5 beispielhaft durch den Pfeil 90 dargestellt, wobei die untere Grenze 92 die minimale Brennweite des Zoomsystems 32 angibt, die sich bei der in Figur 2 rechts gezeigte Einstellung ergibt. Die obere Grenze 94 des Gesamt-Zoombereichs 90 gibt entsprechend die maximale Brennweite des Zoomsystems 32 an, welche sich bei der in Figur 2 links gezeigten Einstellung ergibt. Der Gesamt-Zoombereich 90 ist somit insbesondere bauart bedingt vorgegeben und gibt den maximal ermöglichen Bereich an Vergrößerungen des Zoomsystems 32 an.

Wie bereits beschrieben umfasst das Objektivsystem 32 mehrere Objektive 44, 52 mit unterschiedlichen Brennweiten. Jedem dieser Objektive 44, 52 ist ein Zoomteilbereich innerhalb des Gesamt-Zoombereiches 90 zugeordnet, wobei in Figur 5 ein erster Zoomteilbereich 96 für ein erstes Objektiv 44 und ein zweiter Zoomteilbereich 98 eines zweiten Objektivs 52 dargestellt ist. Die beiden Zoomteilbereiche 96, 98 decken jeweils nur einen Teil des Gesamt-Zoombereichs 90 ab und sind insbesondere derart ausgebildet, dass sie sich zumindest teilweise überlappen.

Das Mikroskop 10 ist derart ausgebildet, dass das Zoomsystem 32 jeweils immer nur innerhalb des Zoomteilbereichs 96, 98 verstellbar ist, der dem aktuell in den Strahlengang eingeschwenkten Objektiv 44, 52 zugeordnet ist.

Bei dem in Figur 5 dargestellten Ausführungsbeispiel hat das erste Objektiv 44, dem der Zoomteilbereich 96 zugeordnet ist, verglichen mit dem zweiten Objektiv 52 eine höhere Brennweite und somit eine geringere Vergrößerungswirkung. Der erste Zoomteilbereich 96 ist entsprechend auch derart gewählt, dass er verglichen mit dem zweiten Zoomteilbereich 98 die kleineren Vergrößerungen des Gesamt-Zoombereichs 90 abdecken, wogegen der zweite Zoomteilbereich 98 die höheren Vergrößerungen des Gesamt-Zoombereichs 90 umfasst.

Somit wird erreicht, dass bei Objektiven 52 mit einer hohen Vergrößerung, also einer geringen Brennweite, auch hohe Vergrößerungen durch das Zoomsystem erreicht werden, so dass insgesamt eine hohe Gesamtvergrößerung erzielt wird.

Umgekehrt wird bei Objektiven 44 mit einer geringen Vergrößerung, also mit einem großen Feldwinkel, ein Zoomteilbereich 96 zugeordnet, bei dem das Zoomsystem 32 ebenfalls eine geringe Vergrößerung und somit einen großen Feldwinkel aufweist.

Somit ist der verwendete Teilbereich des Zoomsystems 32 immer auf die Eigenschaften des jeweiligen Objektivs 44, 52 abgestimmt.

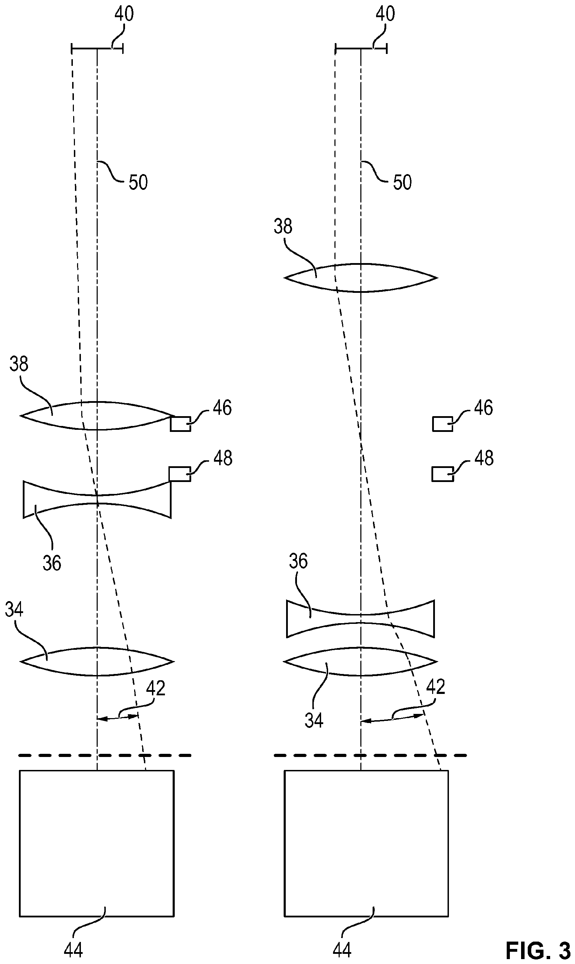

In Figur 3 ist eine schematische Darstellung des Vergrößerungssystems nach Figur 2 in zwei Zuständen gezeigt, wobei das erste Objektiv 44 des Objektivsystems 30 in den Strahlengang eingebracht ist. Bei dem ersten Objektiv 44, das eine verhältnismäßig große Brennweite, also eine geringe Vergrößerung, hat, ist durch Begrenzungselemente 46, 48 die Verstellbarkeit des Zoomsystems 32 derart begrenzt, dass, verglichen mit dem maximalen Verstellbereich, der in Figur 2 gezeigt ist, zwar ein Verstellen bis zur minimalen Brennweite (Figur 3, rechts), aber nicht bis zur maximalen Brennweite möglich ist. Entsprechend ist nur ein Verstellen des Zoomsystems 32 innerhalb des ersten Zoomteilbereichs 96 möglich. Durch die Begrenzungselemente 46, 48 wird das Aufeinanderzubewegen der Linsengruppen 36, 38 auf den in Figur 3, links gezeigten Zustand begrenzt. Bei den Begrenzungselementen 46, 48 handelt es sich um Anschläge, die mit dem ersten Objektiv 44 gekoppelt sind, so dass beim Einbringen des ersten Objektivs 44 in den Strahlengang die Anschläge 46, 48 automatisch mit bewegt werden, so dass sie derart angeordnet sind, dass sie im Bewegungsbereich der Linsengruppen 34 bis 38 angeordnet sind.

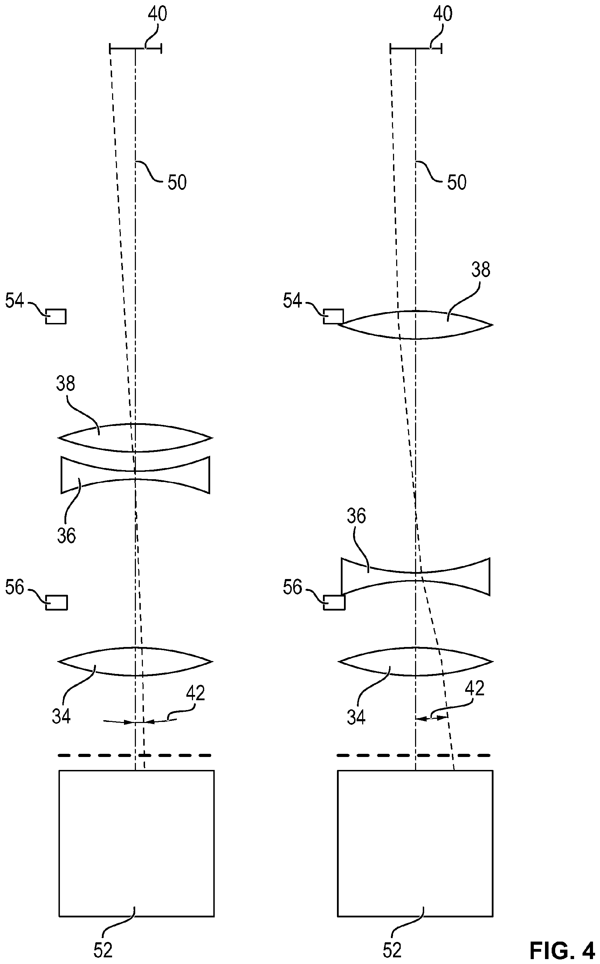

In Figur 4 ist der Fall dargestellt, bei dem das zweite Objektiv 52 in den Strahlengang eingeschwenkt ist. Auch dieses Objektiv 52 umfasst wieder Anschläge 54, 56, durch die die Verstellung des Zoomsystems 32 auf den zweiten Zoomteilbereich 98 begrenzt wird. Bei diesem zweiten Objektiv 52 wird durch die Anschläge 54, 56 verhindert, dass die Linsengruppen 36, 38 weiter als bei dem in Figur 4, rechts gezeigten Zustand voneinander weg bewegt werden, so dass das Einstellen der minimalen Vergrößerung verhindert wird.

Wie in Figur 5 dargestellt sind somit die Zoomteilbereiche 96, 98, in denen das Zoomsystem 32 jeweils betrieben wird, kleiner als der maximale Gesamt-Zoombereich 90 ausgebildet, weswegen das Zoomsystem 32 auch als "überdimensioniertes" oder als "oversized" Zoomsystem bezeichnet wird.

Je nach dem, welches Objektiv 44, 52 in den Strahlengang eingebracht und somit aktuell verwendet wird und je nach Einstellung des Zoomsystems 32 ist eine andere Apertur notwendig, um qualitativ hochwertige Bilder des zu mikroskopierenden Objektes mit den gewünschten Eigenschaften zu erhalten.

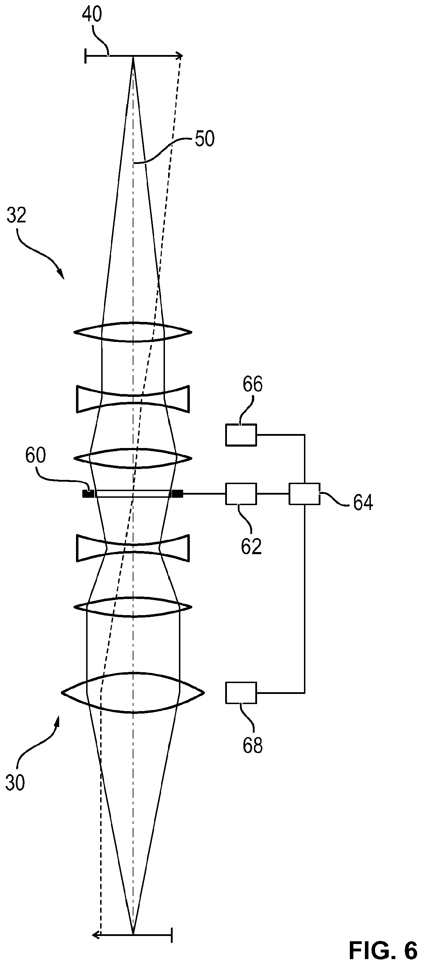

In Figur 6 ist daher eine Ausführungsform gezeigt, bei der zur Einstellung der Apertur eine Aperturblende 60 vorgesehen ist, welche insbesondere in Form einer Irisblende ausgebildet ist. Alternativ können anstelle einer Irisblende auch andere Blendenarten verwendet werden, die es erlaubt, dass die Größe ihrer Öffnung und somit die Apertur verändert werden kann. Es kann auch ein System von Blenden vorgesehen sein, dass mehrere Blenden mit unterschiedlichen Öffnungsgrößen umfasst, die wahlweise je nach notwendiger Apertur in den Strahlengang eingebracht werden können.

Ferner ist eine elektrische Antriebseinheit 62, insbesondere ein Motor, vorgesehen, mit dessen Hilfe die Blende 60 verstellt werden kann, d.h., mit deren Hilfe die Größe der Blende 60 verstellt werden kann.

Ferner umfasst das Mikroskop 10 eine Steuereinheit 64, die den Motor 62 ansteuert und die über ihre Ansteuerungssignale dem Motor 62 vorgibt, welche Einstellung der Blende 60 er einstellen soll.

Die Steuereinheit 64 ist derart ausgebildet, dass sie in Abhängigkeit der jeweils aktuellen Ausprägung bzw. Einstellung des Zoomsystems 32 und des aktuell in den Strahlengang des Mikroskops eingebrachten und somit verwendeten Objektivs 44, 54 die einzustellende Einstellung der Blende 60 ermittelt, die notwendig ist, um die ideale Apertur zu erreichen.

In der Steuereinheit 64 ist insbesondere eine Zuordnungsvorschrift hinterlegt, die für jede mögliche Zoomeinstellung und jedes mögliche Objektiv bzw. die sich hieraus ergebenen Kombinationen jeweils die hierbei notwendige Einstellung der Blende 60 enthält. Die Steuereinheit 64 liest in Abhängigkeit der aktuellen Einstellungen aus dieser Zuordnungsvorschrift die notwendige Einstellung der Blende 60 aus und steuert den Motor 62 entsprechend derart an, dass er die Blende 60 entsprechend der voreingestellten Einstellung einstellt.

Bei einer weiteren Ausführungsform kann zusätzlich oder alternativ zu einer Zuordnungsvorschrift in der Steuereinheit 64 auch eine Rechenvorschrift gespeichert sein, mit deren Hilfe die Steuereinheit 64 in Abhängigkeit der aktuellen Ausprägungen bzw. Einstellungen des Zoomsystems 32 und des ausgewählten Objektivs 44, 52 die jeweils ideale Einstellung der Blende 60 ermittelt.

Das Ermitteln der jeweiligen Einstellung der Blende 60 und auch das tatsächliche Einstellen dieser Einstellung erfolgt insbesondere voll automatisch, ohne dass die Bedienperson des Mikroskops 10 hierzu etwas beisteuern muss. Hierdurch wird erreicht, dass die Bedienperson lediglich die gewünschten Einstellungen des Zoomsystems 32 und des Objektivsystems 30 vornehmen muss und sich nicht weiter um die Ermittlung der jeweils notwendigen Einstellung der Blende 60 kümmern muss. Hierdurch wird ein idealer Aperturverlauf über den gesamten Zoombereich erreicht. Ferner wird somit eine automatische, ideale Einstellung der Apertur des Mikroskops 10 bei gleichzeitig vereinfachter Bedienung des Mikroskops 10, weniger Einarbeitungszeit und geringerem notwendigen Expertenwissen des Benutzers und geringer Anfälligkeit für Fehlbedienungen erzielt. Darüber hinaus ermöglicht ein solches automatisches Einstellen der Blende 60 ein schnelles und präzises Verstellen der Apertur, was für eine rasche sequentielle Aufnahme von Bildern desselben Objektes mit unterschiedlichen Aperturen vorteilhaft ist.

Das Mikroskop 10 umfasst insbesondere einen ersten Sensor 66, mit dessen Hilfe die jeweils aktuelle Ausprägungen bzw. Einstellung des Zoomsystems 32 ermittelt werden kann. Die ermittelte aktuelle Einstellung wird insbesondere an die Steuereinheit 64 übertragen, so dass diese jederzeit weiß, wie das Zoomsystem 32 eingestellt ist und somit die Blende 60 jeweils ideal anpassen kann. Bei dem ersten Sensor 66 kann es sich beispielsweise um einen Hallsensor handeln, mit dessen Hilfe die Drehstellung der Spindel zum Verstellen der Linsengruppen 34 bis 38 des Zoomsystems 32 und somit die Ausprägungen des Zoomsystems 32 ermittelt werden kann.

Analog ist insbesondere ein zweiter Sensor 68 vorgesehen, mit dessen Hilfe die Ausprägung des Objektivsystems 30 ermittelt werden kann, d.h. welches der Objektive 44, 52 des Objektivsystems 30 aktuell in den Strahlengang eingebracht ist. Auch diese Informationen werden an die Steuereinheit 64 übermittelt, so dass diese bei einem Wechsel des Objektivs 44, 52 jeweils automatisch die Einstellung der Blende 60 anpassen kann. Insbesondere weist jedes Objektiv 44, 52 einen Kontakt auf, wobei der Kontakt des Objektivs 44, 52, das in den Strahlengang eingebracht ist, mit einem Kontakt des Sensors 68 in Kontakt ist, so dass dieser auf einfache Weise ermitteln kann, welches Objektiv 44, 52 aktuell in den Strahlengang eingebracht ist.

Die Sensoren 66 und 68 sind insbesondere dann notwendig, wenn das Verstellen des Zoomsystems 32 bzw. des Objektivsystems 30 rein mechanisch und manuell erfolgt, da in diesem Fall keine elektronischen Daten mit Informationen über die aktuellen Einstellungen vorliegen. Erfolgt dagegen das Verstellen des Zoomsystems 32 und des Objektivsystems 30 mit Hilfe von elektronisch angesteuerten Einheiten, so können die hierfür verwendeten Steuersignale von der Steuereinheit 64 zur Ermittlung der Einstellung des Zoomsystems 32 bzw. des Objektivsystems 30 verwendet werden, so dass keine Sensoren 66, 68 notwendig sind.

Bei alternativen Ausführungsformen kann die Steuereinheit 64 bei der Ermittlung der Einstellung der Blende 60 auch nur die Einstellung des Zoomsystems 32 oder nur die Einstellung des Objektivsystems 30 berücksichtigen.

Darüber hinaus ist es alternativ möglich, dass von der Steuereinheit 64 bei der automatischen Einstellung der Blende 60 auch noch weitere Parameter berücksichtigt werden. Beispielsweise können Eigenschaften von Bauteilen des Mikroskops 10 berücksichtigt werden. Insbesondere kann die Auflösung und/oder die Empfindlichkeit der Bilderfassungseinheit 40 von der Steuereinheit 64 mitberücksichtigt werden. Dies ist insbesondere dann sinnvoll, wenn einzelne Bauteile gewechselt werden können, beispielsweise weil es sich um externe Komponenten handelt.

Darüber hinaus können Benutzerpräferenzen und Benutzereinstellungen als weitere Parameter, in Abhängigkeit derer die Steuereinheit 64 die einzustellende Einstellung der Blende 60 ermittelt, verwendet werden. Insbesondere kann die Bedienperson an einem an das Mikroskop 10 angeschlossenen Computer im Klartext verschiedene Präferenzen bzw. Einstellungen auswählen. Beispielsweise kann eine Bedienperson angeben, dass sie eine konstante Helligkeit oder eine erweiterte Auflösung wünscht. Darüber hinaus kann die Bedienperson beispielsweise über einen Menüpunkt "bessere Auflösung" oder "höhere Schärfentiefe" wählen. Je nach Präferenzen und Einstellungen ist jeweils eine andere Apertur notwendig, wobei die Steuereinheit 64 diese im Klartext ausgewählten Präferenzen und Einstellungen automatisch bei der Ermittlung der notwendigen Einstellung der Blende 60 berücksichtigt und die Blende 60 automatisch so einstellt, so dass der Benutzer nicht entsprechend seinen Präferenzen die Blende selbst experimentell einstellen muss, sondern alles automatisch durch die Steuereinheit 64 erfolgt.

Die zuvor beschriebene automatische, elektronische Einstellung der Blende in Abhängigkeit unterschiedlicher Parameter des Mikroskops 10 kann natürlich auch für alle anderen Arten von Mikroskopen, also nicht nur für Mikroskope mit einem "oversized" Zoomsystem, verwendet werden.

Bei einer alternativen Ausführungsführung kann anstelle der Irisblende (60) auch eine Flüssigkristallmatrix mit einem zweidimensionalen Raster von LCD-Segmenten, ein sogenannter "LC Shutter", verwendet werden. Bei dieser Ausführungsform kann auf den Motor (62) verzichtet werden. Stattdessen steuert die Steuereinheit (64) direkt die Flüssigkristallmatrix an und aktiviert bzw. deaktiviert entsprechend die LCD-Segmente.

### Bezugszeichenliste

- 10: Mikroskop
- 12: Stativgrundkörper
- 14: Schwenkeinheit
- 16: Gehäuse
- 18: Objekttisch
- 20: Stellrad
- 30: Objektivsystem
- 32: Zoomsystem
- 34, 36, 38: Linsengruppe
- 40: Bilderfassungseinheit
- 42: Feldwinkel
- 44, 52: Objektiv
- 46, 48, 54, 56: Begrenzungselement
- 50: optische Achse
- 60: Blende
- 62: Motor
- 64: Steuereinheit
- 66,68: Sensor
- 90: Gesamt-Zoombereich
- 92: Untere Grenze
- 94: Obere Grenze
- 96,98: Zoomteilbereich
- P1: Richtung

## Patentansprüche

1. Mikroskop umfassend,
ein Objektivsystem (30), das mindestens zwei wahlweise in den Strahlengang einbringbare Objektive (44, 52) mit unterschiedlichen Brennweiten aufweist,
ein Zoomsystem (32), das einen Gesamt-Zoombereich (90) aufweist, wobei sich die jeweilige Gesamtvergrößerung eines zu mikroskopierenden Objektes jeweils aus der Brennweite des gewählten Objektivs (44, 52) und der innerhalb des Gesamt-Zoombereichs (90) eingestellten Vergrößerung des Zoomsystems (32) ergibt,
eine Blende (60) zur Begrenzung der Apertur des Strahlengangs,
eine Steuereinheit (64) zur Steuerung der Blende (60),
**dadurch gekennzeichnet, dass**
den Objektiven (44, 52) Zoomteilbereich (96, 98) innerhalb des Gesamt-Zoombereichs (90) zugeordnet sind, wobei der zugeordnete Zoomteilbereich jedes der Objektive (44, 52) kleiner als der Gesamt-Zoombereich des Zoomsystems (32) ist, dass Begrenzungsmittel (46, 48, 54, 56) vorgesehen sind, durch die die Verstellbarkeit des Zoomsystems (32) jeweils auf den Zoomteilbereich (96, 98) begrenzt ist, der dem ausgewählten Objektiv (44, 52) zugeordnet ist, wobei als Begrenzungsmittel an jedem Objektiv (44,52) mindestens ein Anschlag (46,48, 54, 56) vorgesehen ist, durch den die Verstellbarkeit des Zoomsystems (32) auf den dem jeweiligen Objektiv (44, 52) zugeordneten Zoomteilbereich begrenzt ist, und dass die Steuereinheit (64) die einzustellende Einstellung der Blende (60) in Abhängigkeit des jeweils gewählten Objektives (44, 52) und/oder der eingestellten Brennweite des Zoomsystems (32) ermittelt.

2. Mikroskop (10) nach Anspruch 1, **dadurch gekennzeichnet, dass** das Mikroskop (10) ferner einen Motor (62) umfasst, der zum Verstellen der Blende (60) zum Einstellen der Größe der Öffnung der Blende (60) vorgesehen ist, und dass die Steuereinheit (64) den Motor (62) automatisch derart ansteuert, dass der Motor (62) die Blende (60) entsprechend einstellt.

3. Mikroskop (10) nach Anspruch 1 oder 2, **dadurch gekennzeichnet, dass** die Blende (60) eine Irisblende ist.

4. Mikroskop (10) nach einem der vorhergehenden Ansprüche, **dadurch gekennzeichnet, dass** die Steuereinheit (64) in Abhängigkeit der aktuellen Ausprägungen mindestens zweier Parameters des Mikroskops (10) jeweils die einzustellende Einstellung der Blende (60) ermittelt.

5. Mikroskop (10) nach einem der vorhergehenden Ansprüche, **dadurch gekennzeichnet, dass** in der Steuereinheit (64) für alle möglichen Ausprägungen der berücksichtigten Parameter jeweils die einzustellende Einstellung der Blende (60) den jeweiligen Ausprägungen eindeutig zugeordnet gespeichert sind.

6. Mikroskop (10) nach einem der vorhergehenden Ansprüche, **dadurch gekennzeichnet, dass** in der Steuereinheit (64) eine Rechenvorschrift gespeichert ist, und dass die Steuereinheit (64) mit Hilfe dieser Rechenvorschrift die einzustellende Einstellung der Blende (60) ermittelt.

7. Mikroskop (10) nach einem der vorhergehenden Ansprüche, **dadurch gekennzeichnet, dass** die einzustellenden Einstellungen der Blende (60) derart vorbestimmt sind, dass sie für die jeweiligen Ausprägungen der Parameter jeweils die optimalen Einstellungen der Blende (60) sind.

8. Mikroskop (10) nach einem der vorhergehenden Ansprüche, **dadurch gekennzeichnet, dass** die Steuereinheit (64) die einzustellende Einstellung der Blende (60) in Abhängigkeit der aktuellen Einstellung der Zoomsystems (32) ermittelt.

9. Mikroskop (10) nach einem der vorhergehenden Ansprüche, **dadurch gekennzeichnet, dass** die Steuereinheit (64) die einzustellende Einstellung der Blende (60) in Abhängigkeit des aktuell in den Strahlengang eingebrachten Objektivs (44, 52) ermittelt.

10. Mikroskop (10) nach einem der vorhergehenden Ansprüche, **dadurch gekennzeichnet**, des die Steuereinheit (64) die einzustellende Einstellung der Blende (60) in Abhängigkeit mindestens einer Eigenschaft mindestens einer Hardwarekomponente (40) des Mikroskops (10) ermittelt.

11. Mikroskop (10) nach Anspruch 10, **dadurch gekennzeichnet**, des die Steuereinheit (64) die einzustellende Einstellung der Blende (60) in Abhängigkeit der Auflösung einer Bilderfassungseinheit (40) des Mikroskops (10), der Empfindlichkeit einer Bilderfassungseinheit (40) des Mikroskops (10), der Auflösung einer Kamera des Mikroskops (10) und/oder der Empfindlichkeit einer Kamera des Mikroskops (10) ermittelt.

12. Mikroskop (10) nach einem der vorhergehenden Ansprüche, **dadurch gekennzeichnet**, des die Steuereinheit (64) die einzustellende Einstellung der Blende (60) in Abhängigkeit mindestens einer Benutzereinstellung eines Benutzers des Mikroskops (10) ermittelt.

13. Mikroskop (10) nach Anspruch 12, **dadurch gekennzeichnet, dass** die Benutzereinstellung die gewünschte Belichtungszeit, eine gewünschte Auflösungsstufe, eine gewünschte Schärfentiefenstufe und/oder eine gewünschte Helligkeitsstufe umfasst.

14. Mikroskop (10) nach einem der vorhergehenden Ansprüche, **dadurch gekennzeichnet, dass** mindestens eine Sensoreinheit (66, 68) zur Ermittlung der aktuellen Ausprägung des Parameters bzw. der aktuellen Ausprägungen der Parameter vorgesehen ist.

15. Mikroskop (10) nach einem der vorhergehenden Ansprüche, **dadurch gekennzeichnet, dass** das Mikroskop (10) ein digitales Mikroskop ist, das eine Bilderfassungseinheit (40) aufweist, auf der ein Bild des zu mikroskopierenden Objekts mit Hilfe des Zoomsystems (32) abgebildet wird.

## Claims

1. Microscope, comprising
an objective system (30), having at least two objectives (44, 52) of different focal lengths, which are selectively insertable into the beam path,
a zoom system (32), having a total zoom region (90), wherein the respective overall magnification of an object that is to be examined using the microscope is obtained in each case from the focal length of the selected objective (44, 52) and the magnification of the zoom system (32) that is set within the total zoom region (90),
a stop (60) for delimiting the aperture of the beam path, a control unit (64) for controlling the stop (60),
**characterized in that**
the objectives (44, 52) are assigned zoom subregions (96, 98) within the total zoom region (90), wherein the assigned zoom subregion of each of the objectives (44, 52) is smaller than the total zoom region of the zoom system (32), **in that** limitation means (46, 48, 54, 56) by way of which the adjustability of the zoom system (32) is in each case limited to the zoom subregion (96, 98) that is assigned to the selected objective (44, 52) are provided, wherein as limitation means on each objective (44, 52) at least one abutment (46, 48, 54, 56) is provided by which the adjustability of the zoom system (32) is limited to the zoom subregion assigned to the respective objective (44, 52), and **in that** the control unit (64) ascertains the setting of the stop (60) to be set in dependence on the respectively selected objective (44, 52) and/or the set focal length of the zoom system (32) .

2. Microscope (10) according to Claim 1, **characterized in that** the microscope (10) furthermore comprises a motor (62) that is provided for adjusting the stop (60) so as to set the size of the opening of the stop (60), and **in that** the control unit (64) automatically controls the motor (62) such that the motor (62) correspondingly sets the stop (60).

3. Microscope (10) according to Claim 1 or 2, **characterized in that** the stop (60) is an iris diaphragm.

4. Microscope (10) according to one of the preceding claims, **characterized in that** the control unit (64) ascertains in each case the setting of the stop (60) to be set in dependence on the current manifestations of at least two parameters of the microscope (10).

5. Microscope (10) according to one of the preceding claims, **characterized in that** the setting of the stop (60) to be set is in each case stored in the control unit (64) for all possible manifestations of the considered parameters in a manner in which said setting is uniquely assigned to the respective manifestations.

6. Microscope (10) according to one of the preceding claims, **characterized in that** a calculation rule is stored in the control unit (64), and **in that** the control unit (64) ascertains the setting of the stop (60) to be set using said calculation rule.

7. Microscope (10) according to one of the preceding claims, **characterized in that** the settings of the stop (60) that are to be set are predetermined in a manner such that they are in each case the optimum settings of the stop (60) for the respective manifestations of the parameters.

8. Microscope (10) according to one of the preceding claims, **characterized in that** the control unit (64) ascertains the setting of the stop (60) to be set in dependence on the current setting of the zoom system (32) .

9. Microscope (10) according to one of the preceding claims, **characterized in that** the control unit (64) ascertains the setting of the stop (60) to be set in dependence on the objective (44, 52) that has currently been inserted into the beam path.

10. Microscope (10) according to one of the preceding claims, **characterized in that** the control unit (64) ascertains the setting of the stop (60) to be set in dependence on at least one property of at least one hardware component (40) of the microscope (10).

11. Microscope (10) according to Claim 10, **characterized in that** the control unit (64) ascertains the setting of the stop (60) to be set in dependence on the resolution of an image capturing unit (40) of the microscope (10), on the sensitivity of an image capturing unit (40) of the microscope (10), on the resolution of a camera of the microscope (10), and/or on the sensitivity of a camera of the microscope (10).

12. Microscope (10) according to one of the preceding claims, **characterized in that** the control unit (64) ascertains the setting of the stop (60) to be set in dependence on at least one user setting of a user of the microscope (10).

13. Microscope (10) according to Claim 12, **characterized in that** the user setting comprises the desired exposure time, a desired level of resolution, a desired level of depth of field and/or a desired brightness level.

14. Microscope (10) according to one of the preceding claims, **characterized in that** at least one sensor unit (66, 68) for ascertaining the current manifestation of the parameter or the current manifestations of the parameters is provided.

15. Microscope (10) according to one of the preceding claims, **characterized in that** the microscope (10) is a digital microscope having an image capturing unit (40) on which an image of the object that is to be examined using the microscope is imaged with the aid of the zoom system (32).

## Revendications

1. Microscope comprenant
un système d'objectif (30) comportant au moins deux objectifs (44, 52) pouvant être introduits sélectivement sur le chemin optique et ayant des distances focales différentes,
un système de zoom (32) ayant une plage de zoom totale (90), dans lequel le grossissement total respectif d'un objet à examiner au microscope résulte respectivement de la distance focale de l'objectif sélectionné (44, 52) et du grossissement du système de zoom (32) réglé dans à l'intérieur de la plage de zoom totale (90),
un diaphragme (60) destiné à limiter l'ouverture du chemin optique,
une unité de commande (64) destinée à commander l'ouverture (60),
**caractérisé en ce que**
des plages de zoom partielles (96, 98) à l'intérieur de la plage de zoom totale (90) sont associées aux objectifs (44, 52), dans lequel la plage de zoom partielle associée de chacun des objectifs (44, 52) est plus petite que la plage de zoom totale du système de zoom (32), **en ce qu'**il est prévu des moyens de limitation (46, 48, 54, 56) à l'aide desquels la possibilité de réglage du système de zoom (32) est respectivement limitée à la plage de zoom partielle (96, 98) qui est associée à l'objectif (44, 52) sélectionné, au moins une butée (46, 48, 54, 56) étant prévue comme moyens de limitation sur chaque objectif (44, 52), par laquelle la possibilité de réglage du système de zoom (32) est limitée à la plage de zoom partielle associée à l'objectif (44, 52) respectif, et **en ce que** l'unité de commande (64) détermine le réglage à effectuer du diaphragme (60) en fonction de l'objectif (44, 52) respectivement sélectionné et/ou de la distance focale réglée du système de zoom (32).

2. Microscope (10) selon la revendication 1, **caractérisé en ce que** le microscope (10) comprend en outre un moteur (62) prévu pour régler le diaphragme (60) afin de régler la dimension de l'ouverture du diaphragme (60), et **en ce que** l'unité de commande (64) actionne automatiquement le moteur (62) de manière à ce que le moteur (62) règle l'ouverture (60) de manière correspondante.

3. Microscope (10) selon la revendication 1 ou 2, **caractérisé en ce que** le diaphragme (60) est un diaphragme à iris.

4. Microscope (10) selon l'une des revendications précédentes, **caractérisé en ce que** l'unité de commande (64) détermine respectivement le réglage à effectuer du diaphragme (60) en fonction des expressions effectives d'au moins deux paramètres du microscope (10).

5. Microscope (10) selon l'une des revendications précédentes, **caractérisé en ce que**, pour toutes les expressions possibles des paramètres pris en compte, les réglages à effectuer du diaphragme (60) sont respectivement stockés dans l'unité de commande (64) en étant associés de manière non ambiguë aux expressions respectives.

6. Microscope (10) selon l'une des revendications précédentes, **caractérisé en ce qu'**une instruction de calcul est stockée dans l'unité de commande (64), et **en ce que** l'unité de commande (64) utilise ladite instruction de calcul pour déterminer le réglage à effectuer du diaphragme (60).

7. Microscope (10) selon l'une des revendications précédentes, **caractérisé en ce que** les réglages à effectuer du diaphragme (60) sont prédéterminés de telle manière qu'ils soient respectivement les réglages optimaux du diaphragme (60) pour les expressions respectives des paramètres.

8. Microscope (10) selon l'une des revendications précédentes, **caractérisé en ce que** l'unité de commande (64) détermine le réglage à effectuer du diaphragme (60) en fonction du réglage effectif du système de zoom (32).

9. Microscope (10) selon l'une des revendications précédentes, **caractérisé en ce que** l'unité de commande (64) détermine le réglage à effectuer du diaphragme (60) en fonction de l'objectif (44, 52) effectivement introduit sur le chemin optique.

10. Microscope (10) selon l'une des revendications précédentes, **caractérisé en ce que** l'unité de commande (64) détermine le réglage à effectuer du diaphragme (60) en fonction d'au moins une caractéristique d'au moins un composant matériel (40) du microscope (10).

11. Microscope (10) selon la revendication 10, **caractérisé en ce que** l'unité de commande (64) détermine le réglage à effectuer du diaphragme (60) en fonction de la résolution d'une unité d'acquisition d'image (40) du microscope (10), de la sensibilité d'une unité d'acquisition d'image (40) du microscope (10), de la résolution d'une caméra du microscope (10) et/ou de la sensibilité d'une caméra du microscope (10).

12. Microscope (10) selon l'une des revendications précédentes, **caractérisé en ce que** l'unité de commande (64) détermine le réglage à effectuer du diaphragme (60) en fonction d'au moins un réglage utilisateur effectué par un utilisateur du microscope (10).

13. Microscope (10) selon la revendication 12, **caractérisé en ce que** le réglage utilisateur comprend le temps d'exposition souhaité, un niveau de résolution souhaité, un niveau de profondeur de champ souhaité et/ou un niveau de luminosité souhaité.

14. Microscope (10) selon l'une des revendications précédentes, **caractérisé en ce qu'**il est prévu au moins une unité de capteur (66, 68) destinée à déterminer l'expression effective du paramètre ou les expressions effectives des paramètres.

15. Microscope (10) selon l'une des revendications précédentes, **caractérisé en ce que** le microscope (10) est un microscope numérique comportant une unité d'acquisition d'image (40) sur laquelle une image de l'objet à examiner au microscope est formée à l'aide du système de zoom (32).
